# EUROPÄISCHE PATENTSCHRIFT

(11) **EP 3 167 498 B1**
(45) Veröffentlichungstag und Bekanntmachung des Hinweises auf die Patenterteilung: **21.12.2022**
(21) Anmeldenummer: 15729399.4
(22) Anmeldetag: 09.06.2015
(51) Int. Cl.: H01M 50/147, H01M 50/20, H01M 50/502

(54) **TRÄGERANORDNUNG ZUM TRAGEN UND HALTEN VON KOMPONENTEN FÜR BATTERIEZELLEN EINES BATTERIEMODULS, INSBESONDERE FÜR EIN ELEKTRISCHES FAHRZEUG**
CARRIER ASSEMBLY FOR CARRYING AND HOLDING COMPONENTS FOR BATTERY CELLS OF A BATTERY MODULE, IN PARTICULAR FOR AN ELECTRIC VEHICLE
DISPOSITIF DE SUPPORT POUR SUPPORTER ET MAINTENIR DES COMPOSANTS POUR ÉLÉMENTS DE BATTERIE D'UN MODULE DE BATTERIE, EN PARTICULIER POUR UN VÉHICULE ÉLECTRIQUE

(30) Priorität: 09.07.2014 DE 102014213275
(43) Veröffentlichungstag der Anmeldung: 17.05.2017
(73) Patentinhaber: Robert Bosch GmbH, 70442 Stuttgart (DE)
(72) Erfinder: HEYDEMANN, Marc, 70563 Stuttgart (DE); ANGERBAUER, Ralf, 71696 Moeglingen (DE); DEPONTE, Rene, 74372 Sersheim (DE); BERG, Philipp, 57368 Lennestadt (DE); HALD, Markus, 73489 Jagstzell (DE); RUEHLE, Andreas, 74321 Bietigheim-Bissingen (DE)
(86) Internationale Anmeldenummer: PCT/EP2015/062781
(87) Internationale Veröffentlichungsnummer: WO 2016/005123

(56) Entgegenhaltungen:
- WO-A1-2014/034079
- DE-A1-102012 015 816
- DE-A1-102012 203 289
- US-A1- 2009 181 288
- US-A1- 2014 120 407
- US-A1- 2015 144 409

## Beschreibung

### Stand der Technik

Die vorliegende Erfindung betrifft eine Trägeranordnung zum Tragen und Halten von Komponenten für Batteriezellen eines Batteriemoduls, insbesondere für ein elektrisches Fahrzeug. Ferner betrifft die vorliegende Erfindung ein Batteriemodul, welches eine derartige Trägeranordnung umfasst.

Eine derartige Trägeranordnung ist beispielsweise aus der DE 10 2012 203 289 A1 bekannt. Hierbei handelt sich um einen Batteriedeckel für eine Hochspannungsautobatterie, wobei der Batteriedeckel einen nicht leitenden Hauptkörper mit mehreren elektrisch leitenden Verbindern umfasst, welche mit dem Hauptkörper gekoppelt sind. Üblicherweise werden andere Komponenten mit den Batteriezellen elektrisch verbunden, wie z.B. Zellüberwachungseinheiten zur Überwachung der Batteriezellen. Allerdings kann das Anordnen solcher Komponenten in einem Batteriemodul oder einer Batterie aufwendig und kompliziert sein, was zu einem großen Bauraum und Gewicht des Batteriemoduls bzw. der Batterie führen kann. Dadurch können ferner hohe Kosten erzeugt werden. Die Dokumente DE10 2012 203289 A1 und WO2014/034079 A1 offenbaren weitere Trägeranordnungen zum Tragen und Halten von Komponenten für Batteriezellen eines Batteriemoduls.

### Offenbarung der Erfindung

Die erfindungsgemäße Erfindung mit den Merkmalen des Anspruchs 1 weist demgegenüber den Vorteil auf, dass der Fertigungsprozess bei der Montage von Batterien und deren Komponenten erleichtert werden kann. Dies wird erfindungsgemäß dadurch erreicht, dass eine Trägeranordnung mehrere Komponenten einer Batterie umfasst. Somit können die verschiedenen Komponenten schnell und in wenigen Arbeitsschritten in einer definierter Lage positioniert bzw. elektrisch miteinander kontaktiert werden, was den Fertigungsaufwand minimiert, Zeit einspart und somit auch einen Kostenvorteil mit sich bringt. Außerdem kann das Herstellen der erfindungsgemäßen Trägeranordnung bzw. eines Batteriemoduls automatisiert werden. Da eine Batterie z.B. eines elektrischen Fahrzeugs mehrere Batteriemodule und dementsprechend mehrere Trägeranordnungen aufweist, kann dabei der Kostenvorteil der erfindungsgemäßen Trägeranordnung vervielfacht werden. Somit ergibt sich eine erhebliche Kostenersparnis. Hierbei umfasst die Trägeranordnung einen nicht leitenden Hauptkörper, und eine Vielzahl von elektrischen Verbindungselementen zur elektrischen Verbindung der Batteriezellen miteinander, wobei die elektrischen Verbindungselemente am Hauptkörper angeordnet sind, einen Entgasungskanal zum Ableiten von aus den Batteriezellen austretendem Gas, und wenigstens eine Zellüberwachungseinheit zur Überwachung wenigstens einer Batteriezelle. Da der Hauptkörper eine tragende Funktion der Trägeranordnung übernimmt, können die elektrischen Verbindungselemente für die Stromleitung optimiert werden. Daher kann weiter Gewicht eingespart werden. Als Batteriemodul ist ein Modul zu verstehen, welches aus einer Vielzahl von in Reihe oder parallel miteinander verbundenen Batteriezellen ausgebildet ist.

Die Unteransprüche zeigen bevorzugte Weiterbildungen der Erfindung.

Vorzugsweise sind die elektrischen Verbindungselemente beidseitig zu einer Mittelachse des Hauptkörpers angeordnet. Somit kann das Anordnen der elektrischen Verbindungselemente schnell erfolgen, indem das Automatisieren des Verfahrens vereinfacht werden kann.

Ferner kann der Hauptkörper Befestigungsmittel aufweisen, mittels deren die elektrischen Verbindungselemente formschlüssig und/oder kraftschlüssig am Hauptkörper befestigt sind. Dadurch können je nach Anwendung die elektrischen Verbindungselemente in einfacher Weise am Hauptkörper befestigt werden.

Vorteilhafterweise können die Befestigungsmittel des Hauptkörpers Vorsprünge und die elektrischen Verbindungselemente Ausnehmungen aufweisen, wobei die Vorsprünge der Befestigungsmittel mit den Ausnehmungen der elektrischen Verbindungselemente miteinander im Eingriff stehen. Dabei können vorzugsweise die Befestigungsmittel als Raststege ausgebildet sein, welche Vorsprünge wie z.B. Rasthaken und/oder Rastnasen und/oder Verclipsungen und/oder Filmscharniere aufweisen. Diese Vorsprünge greifen in die entsprechenden Ausnehmungen der Verbindungselemente, welche z.B. Bohrungen und/oder abgeschrägte Kanten und/oder Nuten umfassen können. Dadurch können je nach Anwendung die elektrischen Verbindungselemente in einfacher und sicherer Weise am Hauptkörper angeordnet sein.

Weiterhin wird vorgeschlagen, dass der Hauptkörper ferner Isolationseinrichtungen zum Isolieren der elektrischen Verbindungselemente aufweist. Somit können je nach Bedarf elektrische Verbindungselemente voneinander isoliert werden, wodurch z.B. ein Kurzschluss zwischen benachbarten Batteriezellen vermieden werden kann. Durch die Isolierung der elektrischen Verbindungselemente kann eine sichere Funktion der Batteriezellen sichergestellt werden.

Um eine bessere Anordnung bzw. Ausrichtung der elektrischen Verbindungselemente am Hauptkörper bereitzustellen, können die Isolationseinrichtungen Nuten zum Führen und Halten der elektrischen Verbindungselemente aufweisen.

Gemäß einer weiteren vorteilhaften Ausgestaltung der vorliegenden Erfindung können die elektrischen Verbindungselemente am Hauptkörper derart angeordnet sein, dass die elektrischen Verbindungselemente von wenigstens einer Seite, vorzugsweise zwei Seiten, zugänglich sind. Somit kann eine elektrische Kontaktierung der elektrischen Verbindungselemente mit den Batteriezellen sowie der Zellüberwachungseinheit in einfacher Weise erfolgen. Vorzugsweise sind die elektrischen Verbindungselemente plattenförmig ausgebildet und als Vorsprünge am Hauptkörper angeordnet, wobei beide flächigen Seiten der Verbindungselemente zugänglich sind.

Ferner ist es vorteilhaft, wenn die Trägeranordnung ferner eine Leiterplatte umfasst, an welcher die Zellüberwachungseinheit angeordnet ist. Durch das Vorsehen einer Leiterplatte können bei der erfindungsgemäßen Trägeranordnung Zellüberwachungseinheiten von verschiedenen Herstellern benutzt werden, ohne den Aufbau der Trägeranordnung ändern zu müssen. Weiter bevorzugt kann der Hauptkörper plattenförmig ausgebildet sein, wobei die Leiterplatte auf einer ersten Oberfläche des Hauptkörpers angeordnet sein kann. Somit kann ein kompakter und flacher Aufbau der Trägeranordnung ermöglicht werden. Außerdem bietet ein plattenförmiger Hauptkörper den Vorteil einer schnellen und kostengünstigen Herstellung. Die Leiterplatte kann z.B. mithilfe von Kunstoffclips bzw. Kunstoffhaken und/oder durch ein Fügeverfahren wie z.B. Kleben oder Heißverstemmung auf der ersten Oberfläche des Hauptkörpers befestigt sein.

Des Weiteren bevorzugt kann der Entgasungskanal auf der Leiterplatte angeordnet sein. Dadurch kann eine noch kompaktere Trägeranordnung bereitgestellt werden, wobei die Trägeranordnung schichtenförmig ausgebildet sein kann.

Besonders bevorzugt kann die Trägeranordnung eine Vielzahl von Zellüberwachungseinheiten aufweisen, wobei jede der Zellüberwachungseinheiten eingerichtet ist, eine Batteriezelle zu überwachen. Erfindungsgemäß kann an einem ersten Ende der Leiterplatte ein Sammelstecker zum Verbinden der Zellüberwachungseinheiten mit einem Batteriemanagementsystem vorgesehen sein. Durch das Vorsehen mehrerer Zellüberwachungseinheiten, wobei jede Zellüberwachungseinheit einer einzigen Batteriezelle zugeordnet ist, kann jede Batteriezelle einzeln und autonom überwacht werden. Der Sammelstecker dient dazu, eine gemeinsame elektrische Verbindungsschnittstelle zwischen den Zellüberwachungseinheiten und einem Batteriemanagementsystem bereitzustellen. Auch im Falle einer einzigen Zellüberwachungseinheit kann der Sammelstecker über die Zellüberwachungseinheit erfasste Signale der einzelnen Batteriezellen sammeln und auf ein Batteriemanagementsystem übertragen.

Auch ist es vorteilhaft, wenn die Trägeranordnung ferner ein Batteriemanagementsystem umfasst, welches auf der Leiterplatte angeordnet ist. Dadurch kann z.B. ein gleichmäßiges Altern der Batterie ermöglicht werden, indem die Batteriezellen basierend auf über die Zellüberwachungseinheiten erfassten Signalen gezielt eingeschaltet und abgeschaltet werden. Somit können die Batteriezellen bzw. das Batteriemodul z.B. vor einer Tiefentladung und einer Überhitzung geschützt werden. Dabei ist vorstellbar, dass das Batteriemanagementsystem mit den Zellüberwachungseinheiten integriert in einer einzigen Einheit sein kann. Ferner kann durch das Anordnen des Batteriemanagementsystems auf der Leiterplatte eine kompakte vormontiere Baugruppe ermöglicht werden, welche einfach und schnell in ein Batteriemodul eingesetzt werden kann.

Besonders bevorzugt kann an einem zweiten Ende der Leiterplatte ein Auslassstutzen am Entgasungskanal zum Ableiten des aus den Batteriezellen austretenden Gases angeordnet sein. Somit kann durch einen gemeinsamen Auslass das aus allen Batteriezellen eines Batteriemoduls austretende Gas abtransportiert werden.

Vorzugsweise können der Hauptkörper erste Öffnungen und die Leiterplatte zweite Öffnungen aufweisen, welche in Strömungsverbindung miteinander sind, wobei die ersten Öffnungen eingerichtet sind, das aus den Batteriezellen austretende Gas aufzunehmen. Erfindungsgemäß stehen die zweiten Öffnungen in Strömungsverbindung mit dem Entgasungskanal. Somit kann eine möglichst kurze Abfuhrstrecke für das Gas ermöglicht werden, wodurch auf zusätzliche Leitungen verzichtet werden kann. Dies hat zum einen eine schnelle Abfuhr des von den Batteriezellen entstehenden Gases und zum anderen einen geringeren Fertigungsaufwand zur Folge. Wenn die Batteriezellen mit Berstventilen vorgesehen sind, sind die ersten Öffnungen des Hauptkörpers derart angeordnet, dass die ersten Öffnungen die Berstventile freilegen.

Dabei können bevorzugt die ersten Öffnungen und die zweiten Öffnungen als Langlöcher ausgebildet sein. Somit kann eine große Menge von Gas schnell abgeführt werden. Die Langlöcher können vorzugsweise über eine gesamte Länge des Hauptkörpers gleichmäßig verteilt sein, wobei eine Längsachse jedes Langlochs bevorzugt senkrecht zu der Mittelachse des Hauptkörpers ist.

Des Weiteren bevorzugt kann der Hauptkörper aus Kunststoff ausgebildet sein. Dadurch weist der Hauptkörper bzw. die Trägeranordnung eine hohe Flexibilität auf. Somit kann ein möglicher Versatz, welcher durch Toleranzen und Eigenbewegungen der Batteriezellen auftreten kann, ausgeglichen werden.

Nach einer vorteilhaften Auslegung der erfindungsgemäßen Trägeranordnung kann die Trägeranordnung ferner ein Modulendterminal aufweisen, welches am Hauptkörper angeordnet ist und zur elektrischen Verbindung des Batteriemoduls mit anderen Batteriemodulen dient.

Vorteilhafterweise kann die Zellüberwachungseinheit bzw. die Vielzahl der Zellüberwachungseinheiten mit den elektrischen Verbindungselementen bzw. dem Modulendterminal mittels Bonddrähten kontaktiert sein. Dabei können die Bonddrähte an den elektrischen Verbindungselementen bzw. dem Modulendterminal angeschweißt sein.

Weiter bevorzugt kann ein Blechteil auf einer zweiten Oberfläche des Hauptkörpers vorgesehen sein. Somit kann im Falle eines thermischen Durchgehens einer oder mehrerer Batteriezellen ein emittierter Gasstrahl abgelenkt werden. Das Blechteil kann z.B. als ein Prallblechteil aus Metall ausgebildet sein.

Ferner betrifft die vorliegende Erfindung ein Batteriemodul, welches eine erfindungsgemäße Trägeranordnung umfasst. Damit sind die oben mit Bezug auf die Trägeranordnung genannten Vorteile verbunden. Dabei kann vorzugsweise eine Trägeranordnung pro Batteriemodul verwendet werden.

Ein weiterer Aspekt der vorliegenden Erfindung betrifft eine elektrische Batterie bzw. ein elektrisches Fahrzeug, welche eine erfindungsgemäße Trägeranordnung oder ein erfindungsgemäßes Batteriemodul umfassen. Somit kann durch den kompakten Aufbau der Trägeranordnung bzw. der Batterie eine höhere Anzahl von Batterien im elektrischen Fahrzeug benutzt werden, was zu einem höheren Leistungsbetrag führen kann.

### Kurze Beschreibung der Zeichnungen

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, stark vereinfachte Ansicht einer Trägeranordnung gemäß einem bevorzugten Ausführungsbeispiel der vorliegenden Erfindung,
- Figur 2: eine schematische, stark vereinfachte Draufsicht eines Teils eines Hauptkörpers der in Figur 1 gezeigten Trägeranordnung, wobei zwei Befestigungsmittel und zwei Isolationseinrichtungen dargestellt sind,
- Figur 3: eine schematische, stark vereinfachte Ansicht des in Figur 2 gezeigten Teils des Hauptkörpers der Trägeranordnung von unten,
- Figur 4: eine schematische, stark vereinfachte Draufsicht eines elektrischen Verbindungselements, welches über das Befestigungsmittel der Figuren 2 und 3 an der Trägeranordnung befestigt ist,
- Figur 5: eine schematische, stark vereinfachte Ansicht der in Figur 1 gezeigten Trägeranordnung in einem ersten Schritt deren Herstellungsverfahrens bzw. Montageverfahrens,
- Figur 6: eine schematische, stark vereinfachte Ansicht der in Figur 1 gezeigten Trägeranordnung in einem zweiten Schritt deren Herstellungsverfahrens bzw. Montageverfahrens, und
- Figur 7: eine schematische, stark vereinfachte Schnittansicht eines Teils der Trägeranordnung, wobei ein schichtförmiger Aufbau der Trägeranordnung dargestellt ist.

### Bevorzugte Ausführungsform der Erfindung

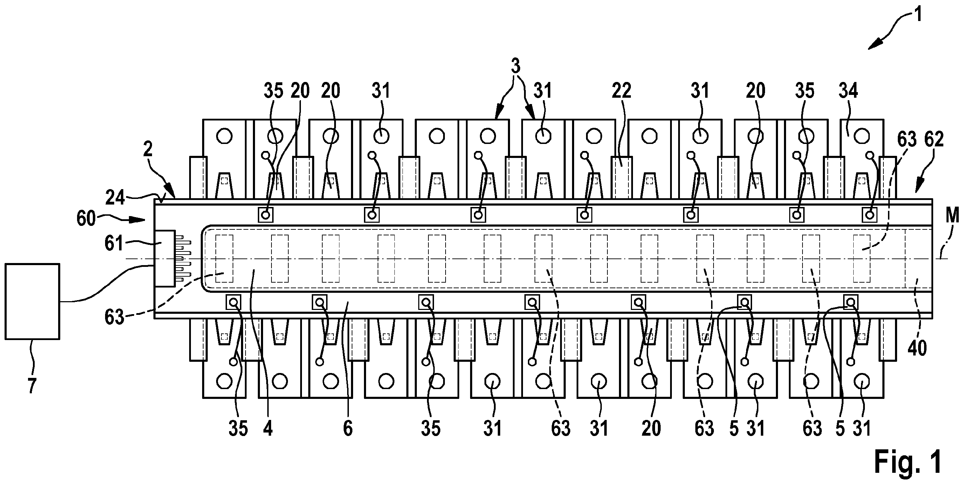

Nachfolgend wird unter Bezugnahme auf die Figuren 1 bis 6 eine Trägeranordnung 1 gemäß einem bevorzugten Ausführungsbeispiel der vorliegenden Erfindung im Detail beschrieben.

Wie aus Figur 1 ersichtlich ist, umfasst die erfindungsgemäße Trägeranordnung 1 einen nicht leitenden Hauptkörper 2 und eine Vielzahl von elektrischen Verbindungselementen 3 zur elektrischen Verbindung von nicht gezeigten Batteriezellen miteinander.

Erfindungsgemäß weist die Trägeranordnung 1 ferner einen Entgasungskanal 4 zum Ableiten von aus den Batteriezellen austretendem Gas und eine Vielzahl von Zellüberwachungseinheiten 5 zur Überwachung der Batteriezellen auf. Dabei ist jede der Zellüberwachungseinheiten 5 eingerichtet, eine Batteriezelle zu überwachen.

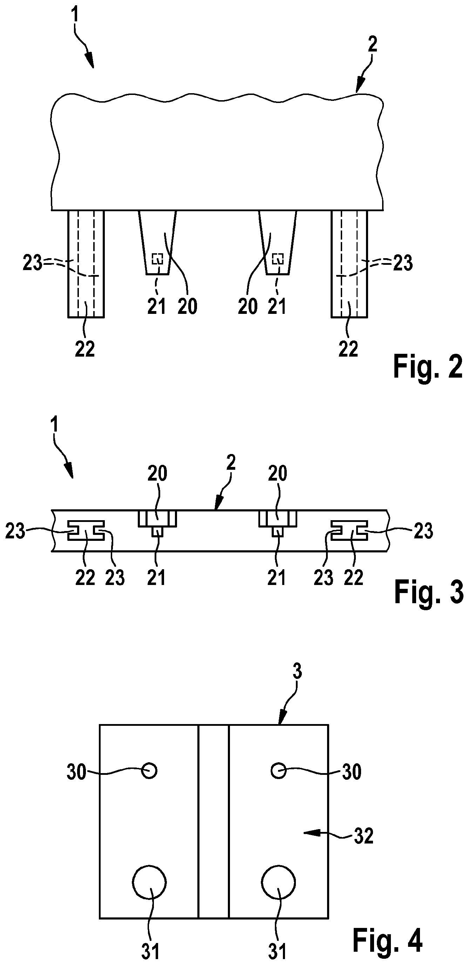

Der Hauptkörper 2, welcher plattenförmig ausgebildet ist, weist eine Vielzahl von als Raststege ausgebildeten Befestigungsmitteln 20 auf, mittels deren die elektrischen Verbindungselemente 3 formschlüssig und kraftschlüssig am Hauptkörper 2 befestigt sind. Insbesondere sind die Befestigungsmittel 20 mit Vorsprüngen 21 und die elektrischen Verbindungselemente 3 mit ersten Ausnehmungen 30 vorgesehen (Figuren 2 bis 4). Die Vorsprünge 21 der Befestigungsmittel 20 stehen mit den Ausnehmungen 30 der elektrischen Verbindungselemente 3 miteinander im Eingriff. In diesem Ausführungsbeispiel sind die Vorsprünge 21 als Rasthaken und die ersten Ausnehmungen 30 als Durchgangsbohrungen ausgebildet. Alternativ können die Vorsprünge 21 als Rastnasen, Verclipsungen oder Filmscharniere und die Ausnehmungen 30 als abgeschrägte Kanten oder Nuten ausgebildet sein.

Ferner sind die elektrischen Verbindungselemente 3 beidseitig zu einer Mittelachse M des Hauptkörpers 2 angeordnet und über den gesamten Hauptkörper 2 in Richtung der Mittelachse M gleichmäßig verteilt (Figur 1). Außerdem weisen die elektrischen Verbindungselemente 3 zweite, ebenso als Durchgangsbohrungen ausgebildete Ausnehmungen 31 auf, über welche die nicht gezeigten Batteriezellen verbunden sind (Figur 4).

Die elektrischen Verbindungselemente 3 sind in diesem Ausführungsbeispiel als Blechteile ausgebildet. Weiterhin sind die elektrischen Verbindungselemente 3 von einer ersten flächigen Seite 32 (Oberseite) und einer zweiten flächigen Seite (Unterseite) zur einfacheren elektrischen Kontaktherstellung zwischen den Batteriezellen zugänglich (Figur 1). In der Ansicht der Figur 4 ist nur die erste flächige Seite 32 des elektrischen Verbindungselements 3 sichtbar. Die zweite flächige Seite (Unterseite) liegt parallel zur ersten flächigen Seite 32 in einer senkrecht auf der Blattebene stehenden Richtung.

Zum Isolieren von benachbarten elektrischen Verbindungselementen 3 bzw. zum Vermeiden von Kurzschlüssen zwischen benachbarten elektrischen Verbindungselementen 3 weist der Hauptkörper 2 ferner als Stege ausgebildete Isolationseinrichtungen 22 auf. Zusätzlich zu ihrer Isolationsfunktion weisen die Isolationseinrichtungen 22 Nuten 23 zum Führen und Halten der elektrischen Verbindungselemente 3 auf (Figuren 2 und 3).

Weiterhin umfasst die Trägeranordnung 1 eine Leiterplatte 6, welche auf einer Oberfläche 24 des Hauptkörpers 2 angeordnet ist und an welcher die Zellüberwachungseinheiten 5 angeordnet sind. Die Kontaktierung zwischen der Zellüberwachungseinheiten 5 und der Batteriezellen erfolgt über Bonddrähte 35, welche die elektrischen Verbindungselemente 3 mit der Leiterplatte 6 verbinden.

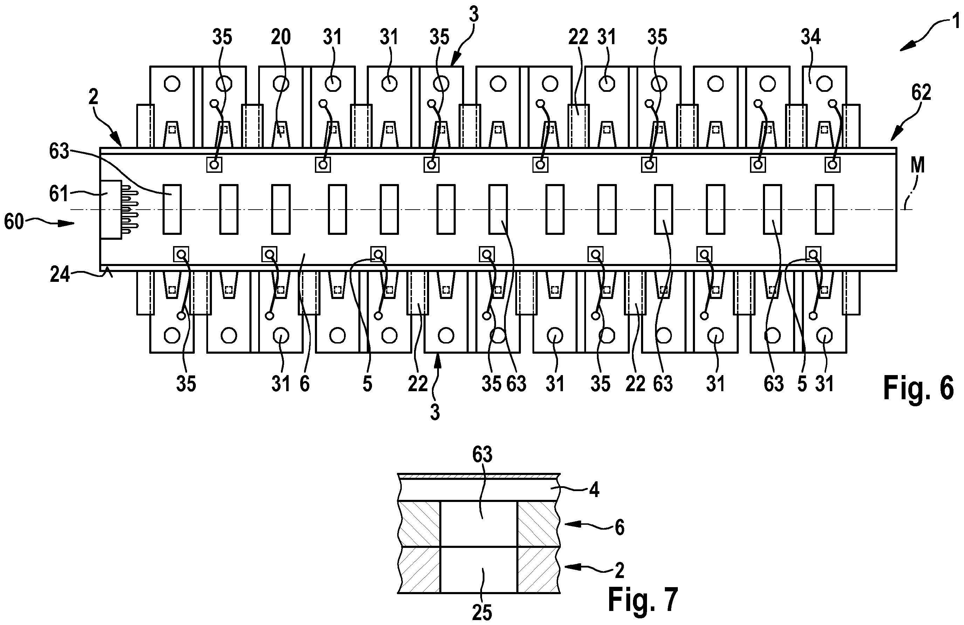

Auf der Leiterplatte 6 ist der Entgasungskanal 4 angeordnet. Um das aus den Batteriezellen austretende Gas in den Entgasungskanal 4 zu führen, weist der Hauptkörper 2 erste Öffnungen 25 und die Leiterplatte 6 zweite Öffnungen 63 auf (Figur 7). Die ersten Öffnungen 25 des Hauptkörpers und die zweiten Öffnungen 63 der Leiterplatte 6 sind zueinander ausgerichtet und stehen in Strömungsverbindung miteinander. Die ersten Öffnungen 25 sind ferner eingerichtet, das aus den Batteriezellen austretende Gas aufzunehmen. Weiterhin sind die zweiten Öffnungen 63 in Strömungsverbindung mit dem Entgasungskanal 4.

An einem ersten Ende 60 der Leiterplatte 6 ist ein Sammelstecker 61 zum Sammeln von über die Zellüberwachungseinheiten 5 erfassten Daten über den jeweiligen Zustand der Batteriezellen angeordnet. Der Sammelstecker 61 ist ferner mit einem Batteriemanagementsystem 7 verbunden, auf das die erfassten Daten übertragen werden.

An einem zweiten Ende 62 der Leiterplatte 6 ist ein Auslassstutzen 40 am Entgasungskanal 4 zum Ableiten des aus den Batteriezellen austretenden Gases angeordnet. Am zweiten Ende 62 der Leiterplatte 6 ist ferner ein Modulendterminal 34 am Hauptkörper 2 zur elektrischen Verbindung des Batteriemoduls mit anderen nicht gezeigten Batteriemodulen angeordnet.

Nachfolgend wird unter Bezugnahme auf die Figuren 1, 5 und 6 ein Herstellverfahren bzw. Montageverfahren der oben beschriebenen erfindungsgemäßen Trägeranordnung 1 beschrieben.

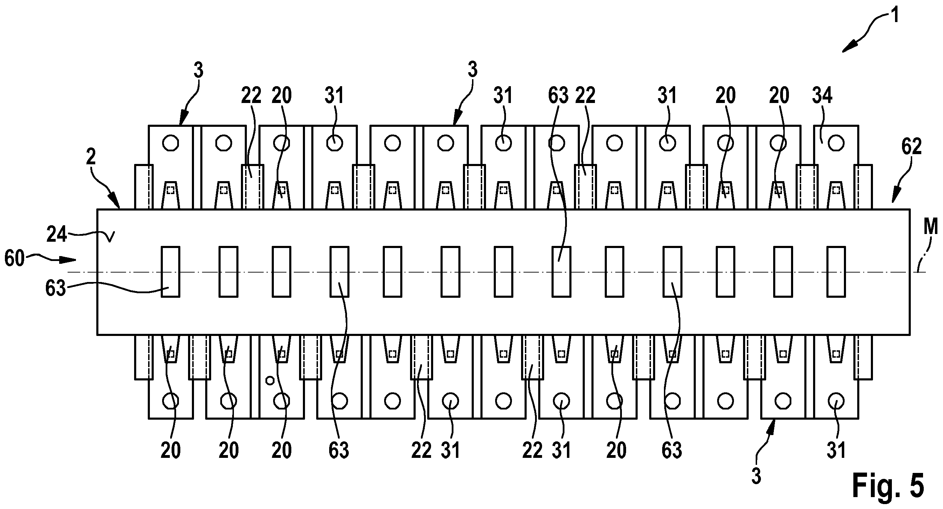

In einem ersten Schritt (Figur 5) werden die elektrischen Verbindungselemente 3 mittels der Befestigungsmittel 20 des Hauptkörpers 2 am Hauptkörper 2, welcher z.B. mittels Spritzgießens gefertigt ist, befestigt. In einem zweiten Schritt (Figur 6) werden die Leiterplatte 6 auf der Oberfläche 24 des Hauptkörpers 2 und die Zellüberwachungseinheiten 5 auf der Leiterplatte 6 angeordnet. Im Anschluss daran erfolgt die elektrische Kontaktierung der Leiterplatte 6 mit den elektrischen Verbindungselementen 3 und dem Modulendterminal 34 mittels der Bonddrähte 35. In einem letzten Schritt wird der Entgasungskanal 4 auf der Leiterplatte 6, beispielsweise durch ein Fügeverfahren wie Kleben oder Verschrauben, befestigt, wodurch sich die Trägeranordnung 1 der Figur 1 ergibt. Hierdurch weist die Trägeranordnung einen flachen und kompakten Aufbau auf.

Durch die erfindungsgemäße Trägeranordnung 1 kann der Fertigungsaufwand verringert werden, wobei auch ein schichtförmiger Aufbau der Trägeranordnung 1 ermöglicht werden kann. Die erfindungsgemäße Trägeranordnung kann ferner als eine vormontierte Baugruppe schnell und einfach in ein Batteriemodul eingesetzt bzw. ersetzt werden.

Weiterhin weist die erfindungsgemäße Trägeranordnung 1 einen modularen Aufbau auf, so dass auch eine schnelle und einfache Anpassung der Trägeranordnung 1 an verschiedene Anforderungsprofile, z.B. verschiedener Fahrzeughersteller, z.B. durch Austausch der Leiterplatte 6 oder der elektrischen Verbindungselemente 3 möglich ist.

## Patentansprüche

1. Trägeranordnung zum Tragen und Halten von Komponenten für Batteriezellen eines Batteriemoduls, insbesondere für ein elektrisches Fahrzeug, umfassend:
- einen nicht leitenden Hauptkörper (2), und
- eine Vielzahl von elektrischen Verbindungselementen (3) zur elektrischen Verbindung der Batteriezellen miteinander, wobei die elektrischen Verbindungselemente (3) am Hauptkörper (2) angeordnet sind,
- einen Entgasungskanal (4) zum Ableiten von aus den Batteriezellen austretendem Gas, und
- wenigstens eine Zellüberwachungseinheit (5) zur Überwachung wenigstens einer Batteriezelle, wobei
der Hauptkörper (2) ferner Isolationseinrichtungen (22) zum Isolieren der elektrischen Verbindungselemente (3) aufweist,
wobei
die Isolationseinrichtungen (22) Nuten (23) zum Führen und Halten der elektrischen Verbindungselemente (3) aufweisen
**dadurch gekennzeichnet, dass**
der Hauptkörper (2) Befestigungsmittel (20) aufweist, mittels deren die elektrischen Verbindungselemente (3) formschlüssig und/oder kraftschlüssig am Hauptkörper (2) befestigt sind und wobei
die Befestigungsmittel (20) Vorsprünge (21) und die elektrischen Verbindungselemente (3) Ausnehmungen (30) aufweisen, wobei
die Vorsprünge (21) der Befestigungsmittel (20) mit den Ausnehmungen (30) der elektrischen Verbindungselemente (3) miteinander im Eingriff stehen.

2. Trägeranordnung nach Anspruch 1, **dadurch gekennzeichnet, dass** die elektrischen Verbindungselemente (3) beidseitig zu einer Mittelachse M des Hauptkörpers (2) angeordnet sind.

3. Trägeranordnung nach einem der vorherigen Ansprüche, **dadurch gekennzeichnet, dass** die elektrischen Verbindungselemente (3) am Hauptkörper (2) derart angeordnet sind, dass die elektrischen Verbindungselemente (3) von wenigstens einer Seite (32), vorzugsweise zwei Seiten (32, 33), zugänglich sind.

4. Trägeranordnung nach einem der vorherigen Ansprüche, ferner umfassend eine Leiterplatte (6), an welcher die Zellüberwachungseinheit (5) angeordnet ist.

5. Trägeranordnung nach einem der vorherigen Ansprüche, **dadurch gekennzeichnet, dass** der Hauptkörper (2) plattenförmig ausgebildet ist und dass die Leiterplatte (6) auf einer Oberfläche (24) des Hauptkörpers (2) angeordnet ist.

6. Trägeranordnung nach Anspruch 4 oder 5, **dadurch gekennzeichnet, dass** der Entgasungskanal (4) auf der Leiterplatte (6) angeordnet ist.

7. Trägeranordnung nach einem der Ansprüche 4 bis 6 **gekennzeichnet durch** eine Vielzahl von Zellüberwachungseinheiten (5), wobei jede der Zellüberwachungseinheiten (5) eingerichtet ist, eine Batteriezelle zu überwachen, wobei an einem ersten Ende (60) der Leiterplatte (6) ein Sammelstecker (61) zum Verbinden der Zellüberwachungseinheiten (5) mit einem Batteriemanagementsystem (7) vorgesehen ist.

8. Trägeranordnung nach einem der Ansprüche 4 bis 7, ferner umfassend ein Batteriemanagementsystem (7), welches auf der Leiterplatte (6) angeordnet ist.

9. Trägeranordnung nach einem der Ansprüche 4 bis 8, **dadurch gekennzeichnet, dass** an einem zweiten Ende (62) der Leiterplatte (6) ein Auslassstutzen (40) am Entgasungskanal (4) zum Ableiten des aus den Batteriezellen austretenden Gases angeordnet ist.

10. Trägeranordnung nach einem der Ansprüche 5 bis 9, **dadurch gekennzeichnet, dass** der Hauptkörper (2) erste Öffnungen (25) und die Leiterplatte (6) zweite Öffnungen (63) aufweisen, welche in Strömungsverbindung miteinander sind, wobei die ersten Öffnungen (25) eingerichtet sind, das aus den Batteriezellen austretende Gas aufzunehmen und die zweiten Öffnungen (63) in Strömungsverbindung mit dem Entgasungskanal (4) stehen.

11. Batteriemodul, umfassend eine Trägeranordnung (1) nach einem der vorherigen Ansprüche.

## Claims

1. Carrier assembly for carrying and holding components for battery cells of a battery module, in particular for an electric vehicle, comprising:
- a non-conductive main body (2) and
- a large number of electrical connecting elements (3) for electrically connecting the battery cells to one another, wherein the electrical connecting elements (3) are arranged on the main body (2),
- a degassing channel (4) for discharging gas which exits from the battery cells, and
- at least one cell monitoring unit (5) for monitoring at least one battery cell, wherein
the main body (2) further has insulation devices (22) for insulating the electrical connecting elements (3),
wherein
the insulating devices (22) have slots (23) for guiding and holding the electrical connecting elements (3), **characterized in that**
the main body (2) has fastening means (20) by means of which the electrical connecting elements (3) are fastened to the main body (2) in a positively locking and/or non-positively locking manner, and wherein
the fastening means (20) have projections (21) and the electrical connecting elements (3) have recesses (30), wherein
the projections (21) of the fastening means (20) are in engagement with the recesses (30) of the electrical connecting elements (3).

2. Carrier assembly according to Claim 1, **characterized in that** the electrical connecting elements (3) are arranged on either side of a centre axis M of the main body (2).

3. Carrier assembly according to either of the preceding claims, **characterized in that** the electrical connecting elements (3) are arranged on the main body (2) in such a way that the electrical connecting elements (3) are accessible from at least one side (32), preferably two sides (32, 33).

4. Carrier assembly according to one of the preceding claims, further comprising a printed circuit board (6) on which the cell monitoring unit (5) is arranged.

5. Carrier assembly according to one of the preceding claims, **characterized in that** the main body (2) is of plate-like design, and **in that** the printed circuit board (6) is arranged on a surface (24) of the main body (2).

6. Carrier assembly according to Claim 4 or 5, **characterized in that** the degassing channel (4) is arranged on the printed circuit board (6).

7. Carrier assembly according to one of Claims 4 to 6, **characterized by** a large number of cell monitoring units (5), wherein each of the cell monitoring units (5) is designed to monitor a battery cell, wherein a combination plug (61) for connecting the cell monitoring units (5) to a battery management system (7) is provided at a first end (60) of the printed circuit board (6).

8. Carrier assembly according to one of Claims 4 to 7, further comprising a battery management system (7) which is arranged on the printed circuit board (6).

9. Carrier assembly according to one of Claims 4 to 8, **characterized in that** an outlet nozzle (40) on the degassing channel (4) for discharging the gas which exits from the battery cells is arranged at a second end (62) of the printed circuit board (6).

10. Carrier assembly according to one of Claims 5 to 9, **characterized in that** the main body (2) has first openings (25) and the printed circuit board (6) has second openings (63), which first and second openings are flow-connected to one another, wherein the first openings (25) are designed to receive the gas which exits from the battery cells and the second openings (63) are flow-connected to the degassing channel (4).

11. Battery module, comprising a carrier assembly (1) according to one of the preceding claims.

## Revendications

1. Ensemble de support destiné à supporter et maintenir des composants destinés à des cellules de batterie d'un module de batterie, en particulier d'un véhicule électrique, ledit ensemble de support comprenant :
- un corps principal non conducteur (2), et
- un grand nombre d'éléments de liaison électrique (3) destinés à relier électriquement les éléments de batterie entre eux, les éléments de liaison électrique (3) étant disposés sur le corps principal (2),
- un canal de dégazage (4) destiné à évacuer le gaz s'échappant des éléments de batterie, et
- au moins une unité de surveillance de cellule (5) destinée à surveiller au moins une cellule de batterie, le corps principal (2) comportant en outre des dispositifs d'isolation (22) destinés à isoler les éléments de liaison électrique (3),
les dispositifs d'isolation (22) comportant des rainures (23) de guidage et de maintien des éléments de liaison électrique (3),
**caractérisé en ce que**
le corps principal (2) comporte des moyens de fixation (20) permettant de fixer les éléments de liaison électrique (3) au corps principal (2) par complémentarité de formes et/ou en force et
les moyens de fixation (20) comportant des saillies (21) et les éléments de liaison électrique (3) comportant des évidements (30), les saillies (21) des moyens de fixation (20) s'engageant avec les évidements (30) des éléments de liaison électrique (3).

2. Ensemble de support selon la revendication 1, **caractérisé en ce que** les éléments de liaison électrique (3) sont disposés de part et d'autre d'un axe central M du corps principal (2).

3. Ensemble de support selon l'une des revendications précédentes, **caractérisé en ce que** les éléments de liaison électrique (3) sont disposés sur le corps principal (2) de manière à ce que les éléments de liaison électrique (3) puissent être accessibles depuis au moins un côté (32), de préférence deux côtés (32, 33) .

4. Ensemble de support selon l'une des revendications précédentes, comprenant en outre une carte de circuit imprimé (6) sur laquelle l'unité de surveillance de cellule (5) est disposée.

5. Ensemble de support selon l'une des revendications précédentes, **caractérisé en ce que** le corps principal (2) est en forme de plaque et **en ce que** la carte de circuit imprimé (6) est disposée sur une surface (24) du corps principal (2).

6. Ensemble de support selon la revendication 4 ou 5, **caractérisé en ce que** le canal de dégazage (4) est disposé sur la carte de circuit imprimé (6).

7. Ensemble de support selon l'une des revendications 4 à 6, **caractérisé par** un grand nombre d'unités de surveillance de cellule (5), chacune des unités de surveillance de cellule (5) étant conçue pour surveiller une cellule de batterie, un connecteur collecteur (61) destiné à relier les unités de surveillance de cellule (5) à un système de gestion de batterie (7) étant prévu à une première extrémité (60) de la carte de circuit imprimé (6).

8. Ensemble de support selon l'une des revendications 4 à 7, comprenant en outre un système de gestion de batterie (7) qui est disposé sur la carte de circuit imprimé (6).

9. Ensemble de support selon l'une des revendications 4 à 8, **caractérisé en ce qu'**une tubulure de sortie (40) est disposée à une deuxième extrémité (62) de la carte de circuit imprimé (6) au niveau du canal de dégazage (4) pour évacuer le gaz s'échappant des cellules de la batterie.

10. Ensemble de support selon l'une des revendications 5 à 9, **caractérisé en ce que** le corps principal (2) comporte des premières ouvertures (25) et la carte de circuit imprimé (6) comporte des deuxièmes ouvertures (63), lesquelles sont en communication fluidique entre elles, les premières ouvertures (25) étant conçues pour recevoir le gaz s'échappant des éléments de batterie et les deuxièmes ouvertures (63) étant en communication fluidique avec le canal de dégazage (4).

11. Module de batterie comprenant un ensemble de support (1) selon l'une des revendications précédentes.
